(19) Europäisches Patentamt
European Patent Office
Office européen des brevets

(11) Publication number: **0 074 066**
**B1**

(12) **EUROPEAN PATENT SPECIFICATION**

(45) Date of publication of patent specification: **16.01.85**

(51) Int. Cl.[4]: **A 01 N 59/20** // (A01N59/20, 53/00, 37/12, 31/16)

(21) Application number: **82108011.6**

(22) Date of filing: **31.08.82**

(54) **Acaricide compositions.**

(30) Priority: **02.09.81 IT 2372681**

(43) Date of publication of application:
**16.03.83 Bulletin 83/11**

(45) Publication of the grant of the patent:
**16.01.85 Bulletin 85/03**

(84) Designated Contracting States:
**AT BE CH DE FR GB LI LU NL SE**

(56) References cited:
**None**

(73) Proprietor: **Montedison S.p.A.**
**Patents & Licensing Dept. Foro Buonaparte, 31**
**P.O. Box 10528**
**I-20121 Milan (IT)**

(72) Inventor: **Caprioli, Vincenzo**
**Via Loriga 8**
**S.Martino (Pavia) (IT)**
Inventor: **Longoni, Angelo**
**Via Melzi D'Eril 16**
**Milan (IT)**
Inventor: **Massardo, Pietro**
**Via Fra Bartolomeo**
**Milan (IT)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 074 066 B1

**Description**

The present invention relates to acaricide mixtures and, more particularly, to mixtures obtained from the synergistic coupling of an acaricide belonging to the class of hydroquinone diethers with metallic copper or copper compounds. This invention relates furthermore to the use of said mixtures in suitable compositions in the treatment of mite infestations of useful plants.

Italian patent applications No. 21003 A/80, No. 26205 A/80 and No. 26401 A/80 describe, among other compounds, the acaricide compounds of formula I and the use thereof as acaricides:

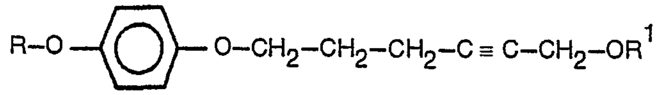

(I)

wherein R is an alkyl $C_8$—$C_{11}$, and $R^1$ is a hydrogen atom, an alkyl $C_1$—$C_4$, an alkenyl $C_2$—$C_4$ or a group

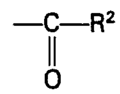

wherein $R^2$ is an alkyl $C_1$—$C_4$, a cycloalkyl $C_3$—$C_6$ or phenyl.

The compounds of formula I are endowed with a high acaricide activity which is exerted mainly against mite eggs.

It is known that a few copper compounds such as copper sulphate, copper hydroxide, copper oxychloride, copper (I) chloride, copper protoxide and copper carbonate possess fungicide properties and are widely employed also in admixture with one another for protecting plants from infections due to fungi.

It is furthermore disclosed in the literature that some copper salts, among which copper oxychloride, exert a repellent action on the *Leptinotarsa decemlineata* larvae and that they are employable, in admixture with insecticides, in the fight against coleopter [Khim. Sel'sk. Khoz. *16* (11), 65 (1978); Chem. Abstr. 90:49599z].

As far as we know, however, a possible acaricide activity of copper compounds or metallic copper has never been reported in the literature.

Moreover, tests carried out by us have confirmed that metallic copper and copper compounds do not possess any acaricide activity particularly against mite eggs.

Instead, we have surprisingly found that the coupling of copper compounds or metallic copper with an acaricide compound of formula I synergizes the acaricide activity of the latter.

Thus, the present invention relates to synergistic mixtures endowed with acaricide activity, consisting of a compound of formula I and of a copper compound or of metallic copper in a ratio by weight of from 1:1 to 1:250, based to the metallic copper or the copper content of the said copper compound.

Metallic copper can be employed in the above-said mixtures in a finely divided form such as electrolytic copper.

The copper compounds employable in the above-mentioned mixtures may be oxides, hydroxide, organic and inorganic salts of mono or divalent copper, also in admixture with one another. Among these compounds we may cite:

— copper (II) sulphate $CuSO_4$
— copper (I) chloride CuCl
— copper (II) chloride $CuCl_2$
— copper (II) carbonate $CuCO_3$
— copper protoxide $Cu_2O$
— copper (II) hydroxide $Cu(OH)_2$
— copper oxychloride (a mixture of copper hydroxide and chloride)
and mixtures thereof.

Since the acaricide action of the compounds of formula I is synergized when they are employed according to the mixtures of this invention, it follows that such mixtures offer also the considerable advantage of allowing the application doses of the compounds of formula I to be reduced providing, however, the same acaricide effectiveness.

The mixtures according to the present invention are suitable for use in agriculture for protecting plants against infestations due to acari.

The main acari of particular economic interest owing to the damages caused to plants and owing to their very extensive diffusion in all cultivated areas belong prevailingly to family *Tetranychidae,* genera *Tetranychus (T. urticae, T. telarius, T. pacificus,* etc.), *Panonychus (P. ulmi, P. citri,* etc.), *Bryobia (B. praetiosa)* and *Oligonychus.*

Further species noxious to the plants belong, for example, to family *Eriophydae* (genera *Aceria,*

*Eriophyes, Phyllocoptes, Phyllocoptruta, Vasates,* etc.), *Tarsonemidae* genus *Hemitarsonemus*) and *Tenuipalpidae.*

For the practical uses in agriculture, the mixtures of the present invention may be employed as such or in the form of suitable compositions.

In the compositions, beside the synergistic mixture as active substance, solid or liquid inert vehicles may be present, as well as, optionally, other additives, such as surfactants, suspending agents, emulsifiers, dispersants, adhesion promoting agents and the like.

According to the usual formulative practice, the compositions may be in the form of dry powders, wettable powders, pastes, concentrated emulsions, emulsifiable liquids, etc.

In the abovesaid compositions, the acaricide mixture may be contained in amounts ranging from 0.5 to 95% by weight depending on the type of composition and on the particular use it is intended for.

The amount of acaricide mixture to be distributed in the area or on the vegetation to be protected depends on various factors such as the type of composition employed, the available application means, the degree and nature of the infestation, the type of plants to be protected, climatic and environmental conditions.

Generally, acaricide mixture amounts ranging from 0.1 to 2 kg/ha are sufficient for a very effective protection of plants from mite infestations.

If desirable, it is possible to prepare a mixture *in situ* upon treatment.

Since many of the employed copper compounds are also endowed with a fungicide activity, it is logical to expect that the mixtures of the invention exhibit also a fungicide activity.

The above-described formulations may optionally contain other compatible active substances selected from insecticides, acaricides, fungicides, phyto growth regulators, fertilizers, etc.

The compounds of formula I are furthermore endowed with an acaricide activity against hibernating eggs of acari. For this use they can be employed as such or in compositions which optionally contain mineral oils. It is possible to employ the mixtures according to the present invention also for treatment of hibernating eggs of acari, optionally in compositions containing also mineral oils.

The following examples are given to better illustrate the present invention.

## Example 1

Demonstration of the synergistic effect.

The acaricide activity of individual compounds and of mixtures according to the present invention was evaluated on *Tetranychus urticae* eggs, sucv acarus being particularly representative due to the damages it causes to plants and to its wide diffusion.

The acaricide activity was determined according to the following general methodology:

Small discs cut from bean leaves were infested with adult females of the acarus, and the females removed after the egg deposition.

The egg-carrying discs were then sprayed with aqueous acetone dispersions of the products or mixtures being tested, at a predetermined concentration.

For comparative purposes, other discs were sprayed only with aqueous acetone.

Seven days after the treatment, the percentage of unhatched eggs (equivalent to the percentage of mortality) was ascertained in comparison with one of the controls.

Until the conclusion of collecting the data the discs were kept at 25°C, 70% of relative humidity and under continuous lighting.

As compounds of formula I, the compounds of formula

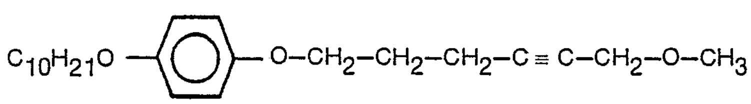

(I-a)

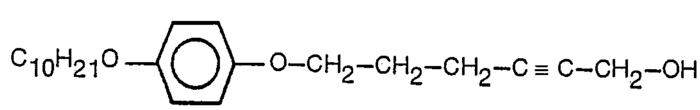

(I-b)

were employed.

As copper compounds, the following ones were utilized:

copper (II) sulphate $CuSO_4$
copper protoxide $Cu_2O$
copper oxychloride (technical grade)
copper (I) chloride $CuCl$
copper (II) chloride $CuCl_2$
copper (II) carbonate $CuCO_3$
and electrolytic metallic copper.

The acaricide activity on eggs of *Tetranychus urticae* exerted by the above-listed compounds

separately employed is recorded in the following Table 1, where it is expressed as percentage of unhatched mite eggs at the indicated doses.

TABLE 1

| COMPOUND | DOSE (ppm) | Percentage of unhatched mite eggs | Approximate copper content |
|---|---|---|---|
| I-a | 0.5 | 64 | — |
| I-b | 0.5 | 44 | — |
| $CuSO_4$ | 1000<br>125<br>25 | 0<br>0<br>0 | 40% |
| $Cu_2O$ | 1000<br>125<br>25 | 0<br>0<br>0 | 89% |
| copper oxychloride (technical grade) | 1000<br>125<br>25 | 0<br>0<br>0 | 51% |
| CuCl | 1000<br>125<br>25 | 0<br>0<br>0 | 64% |
| $CuCl_2$ | 1000<br>125<br>25 | 0<br>0<br>0 | 47% |
| $CuCO_3$ | 1000<br>125<br>25 | 0<br>0<br>0 | 51% |
| electrolytic copper | 1000<br>125<br>25 | 0<br>0<br>0 | 100% |

The acaricide activity of mixtures according to this invention is recorded in the following Table 2.

TABLE 2

| Mixture components | Doses (ppm) | Approx. ratio I/Cu b.w. | Percentage of unhatched eggs found | expected |
|---|---|---|---|---|
| I-a<br>$CuSO_4$ | 0.5<br>125 | 1:100 | 87 | 64 |
| I-a<br>$CuSO_4$ | 0.5<br>25 | 1:20 | 88 | 64 |
| I-a<br>$Cu_2O$ | 0.5<br>125 | 1:220 | 88 | 64 |
| I-a<br>$Cu_2O$ | 0.5<br>25 | 1:44 | 69 | 64 |
| I-a<br>Oxychloride | 0.5<br>125 | 1:127 | 98 | 64 |
| I-a<br>Oxychloride | 0.5<br>25 | 1:25 | 96 | 64 |
| I-a<br>CuCl | 0.5<br>125 | 1:160 | 83 | 64 |
| I-b<br>CuCl | 0.5<br>125 | 1:160 | 90 | 44 |
| I-a<br>$CuCl_2$ | 0.5<br>125 | 1:117 | 92 | 64 |
| I-a<br>$CuCl_2$ | 0.5<br>25 | 1:23 | 81 | 64 |
| I-b<br>$CuCl_2$ | 0.5<br>125 | 1:117 | 80 | 44 |
| I-b<br>$CuCl_2$ | 0.5<br>25 | 1:23 | 89 | 44 |
| I-b<br>$CuCO_3$ | 0.5<br>125 | 1:127 | 60 | 44 |
| I-a<br>Electrolytic Cu | 0.5<br>125 | 1:250 | 75 | 64 |
| I-b<br>Electrolytic Cu | 0.5<br>125 | 1:250 | 56 | 44 |

Since the acaricide activity of metallic copper and of the copper compounds reported in Table 1 proved to be null even at higher doses than the ones considered in the mixtures recorded on Table 2, it could be expected that the acaricide activity of the mixtures of Table 2 might be at the most equal to the one of compounds I-a and I-b taken individually.

Conversely, the data reported in Table 2 unequivocally prove that the acaricide action of compounds I-a and I-b is synergized if such compounds are used in mixtures with metallic copper or copper compounds.

Example 2

Acaricide activity in open fields against acari of species *Panonychus ulmi.*

Apple-trees, cultivated in an open field, naturally and uniformly infested by a mixed population of *Panonychus ulmi*, were treated by spraying up to dripping, by means of a motor pump, with aqueous dispersions of the product and of the mixture being tested. An equal number of plants having the same infestation degree were used as controls.

At successive intervals of time after the treatment, the degree of infestation of the treated plants in comparison with the controls was determined by taking samples of leaves on which the present population was counted.

The acaricide activity was expressed as percentage of infestation reduction in respect of the controls, and the results are recorded in following Table 3.

TABLE 3

| Product or mixture | Dose* (g of a.s./hl) | Approx. ratio I-a/Cu b.wght. | % activity at the following intervals after treatment | |
|---|---|---|---|---|
| | | | 6 days | 14 days |
| I-a | 20 | — | 81 | 92 |
| Technical oxychloride | 50 | — | 0 | 0 |
| I-a<br>Oxychloride | 20<br>50 | 1:1.25 | 89 | 98 |

* g of active ingredient per 100 litres.

**Claims**

1. Acaricide mixtures consisting of a compound of formula

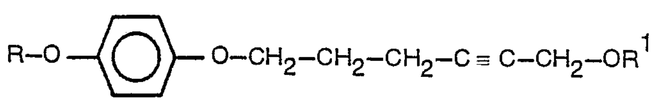 (I)

wherein

R is an alkyl $C_8$—$C_{11}$; and

$R_1$ is a hydrogen atom, an alkyl $C_1$—$C_4$, an alkenyl $C_2$—$C_4$ or a group

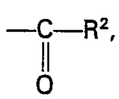 wherein

$R^2$ is an alkyl $C_1$—$C_4$, a cycloalkyl $C_3$—$C_6$ or a phenyl; and metallic copper or a copper compound, in a ratio ranging from 1:1 to 1:250 by weight, based on the metallic copper or the copper content of the said copper compound.

2. A mixture according to claim 1, in which the compound of formula I is the compound of formula

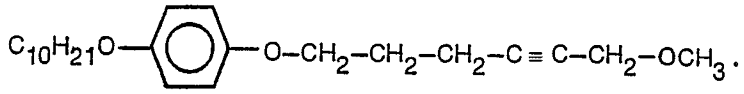

(I)

3. A mixture according to claim 1, in which the compound of formula I is the compound of formula

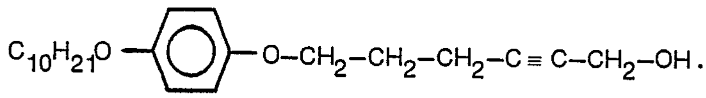

4. A mixture according to any one of claims 1—3, in which the copper compound is selected from
copper (II) sulphate $CuSO_4$
copper protoxide $Cu_2O$
copper (I) chloride $CuCl$
copper (II) chloride $CuCl_2$
copper (II) carbonate $CuCO_3$
copper oxychloride (a mixture of copper hydroxide and copper chloride) and mixtures thereof.

5. A mixture according to any one of claims 1—3, in which the metallic copper employed is electrolytic copper.

6. A method for treating mite infestations on useful plants which comprises distributing on the vegetation an effective amount of a mixture according to any one of claims 1—5, either as such or in a suitable composition.

7. Acaricide compositions containing a mixture according to any one of claims 1—5 as active ingredient together with inert vehicles and, optionally, other additives.

**Patentansprüche**

1. Akarizide Mischungen, bestehend aus einer Verbindung der Formel

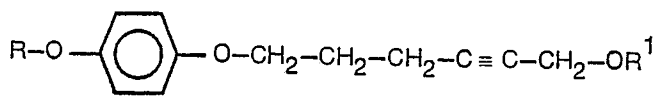

(I)

worin
R ein $C_8$—$C_{11}$—Alkyl ist; und
$R^1$ ein Wasserstoffatom, ein $C_1$—$C_4$—Alkyl, ein $C_2$—$C_4$—Alkenyl oder eine

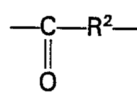—Gruppe ist, worin

$R^2$ ein $C_1$—$C_4$—Alkyl, ein $C_3$—$C_6$—Cycloalkyl oder ein Phenyl ist; und metallischem Kupfer oder einer Kupferverbindung in einem Gewichtsverhältnis im Bereich von 1:1 bis 1:250, bezogen auf das metallische Kupfer oder den Kupfergehalt der Kupferverbindung.

2. Mischung nach Anspruch 1, in der die Verbindung der Formel I die Verbindung der Formel

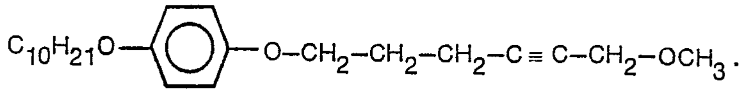

ist.

3. Mischung nach Anspruch 1, in der die Verbindung der Formel I die Verbindung der Formel

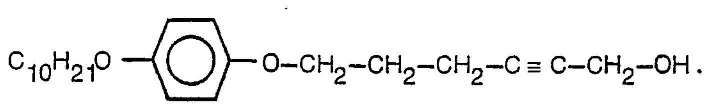

ist.

4. Mischung nach irgendeinem der Ansprüche 1—3, in der die Kupferverbindung ausgewählt is unter

Kupfer(II)-sulfat $CuSO_4$
Kupferprotoxid $Cu_2O$
Kupfer(I)-chlorid $CuCl$
Kupfer(II)-chlorid $CuCl_2$
Kupfer(II)-carbonat $CuCO_3$
Kupferoxychlorid (einem Gemisch aus Kupferhydroxid und Kupferchlorid) und Mischungen davon.

5. Mischung nach irgendeinem der Ansprüche 1—3, in der das verwendete Kupfer Elektrolytkupfer ist.

6. Verfahren zur Behandlung von Milbenbefall auf Nutzpflanzen, welches umfaßt die Verteilung einer wirksamen Menge einer Mischung nach irgendeinem der Ansprüche 1—5, entweder als solche oder in einer geeigneten Zusammensetzung, auf der Vegetation.

7. Akarizide Zusammensetzungen, enthaltend eine Mischung nach irgendeinem der Ansprüche 1—5 als aktiven Bestandteil zusammen mit inerten Trägerstoffen und gegebenenfalls anderen Additiven.

## Revendications

1. Mélanges acariens constitués d'un composé de formule:

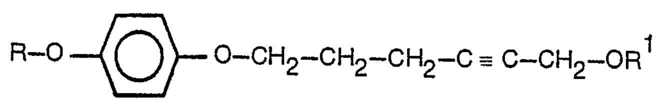 (I)

dans laquelle:

R représente un alkyle en $C_8$ à $C_{11}$; et

$R^1$ représente un atome d'hydrogène, un alkyle en $C_1$ à $C_4$, un alkényle en $C_2$ à $C_4$ ou un groupe —C(O)—$R^2$ dans lequel:

$R^2$ représente un alkyle en $C_1$ à $C_4$, un cycloalkyle en $C_3$ à $C_6$ ou un phényl;

et de cuivre métallique ou d'un composé du cuivre dans un rapport allant de 1/1 à 1/250 en poids, sur la base du cuivre métallique ou de la teneur en cuivre de ce composé du cuivre.

2. Mélange selon la revendication 1, caractérisé en ce que le composé de formule I est le composé de formule:

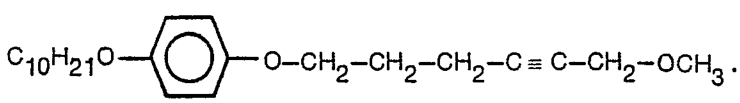

3. Mélange selon la revendication 1, caractérisé en ce que le composé de formule I est le composé de formule:

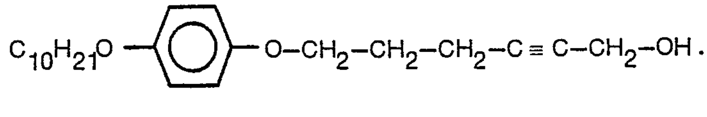

4. Mélange selon l'une quelconques des revendications 1 à 3, caractérisé en ce que le composé de cuivre est choisi parmi:

— sulfate de cuivre $CuSO_4$
— le protoxyde de cuivre $Cu_2O$
— le chlorure de cuivre (I) $CuCl$
— le chlorure de cuivre (II) $CuCl_2$
— le carbonate de cuivre (II) $CuCO_3$
— l'oxychlorure de cuivre (mélange d'hydroxyde de cuivre et de chlorure de cuivre)

et des mélanges de ceux-ci.

5. Mélange selon l'une quelconque des revendications 1 à 3, caractérisé en ce que le cuivre métallique employé est le cuivre électrolytique.

6. Méthode de traitement des plantes utiles infestées par les mites, caractérisée en ce que l'on distribue sur la végétation une quantité efficace d'un mélange selon l'une quelconque des revendications 1 à 5, soit tel quel, soit dans une composition convenable.

7. Composition acaricide contenant un mélange selon l'une quelconque des revendications 1 à 5, en tant que composant actif, en même temps que des véhicules inertes et éventuellement que d'autres additifs.